(19) Europäisches Patentamt
European Patent Office
Office européen des brevets

(11) EP 1 262 527 B1

(12) **FASCICULE DE BREVET EUROPEEN**

(45) Date de publication et mention de la délivrance du brevet:
**29.06.2005 Bulletin 2005/26**

(51) Int Cl.[7]: **C08L 101/00**
// C08L71:02, C08L77:00

(21) Numéro de dépôt: **02290948.5**

(22) Date de dépôt: **16.04.2002**

(54) **Composition de polyméres antistatiques**

Antistatische Polymerzusammensetzungen

Antistatic polymer compositions

(84) Etats contractants désignés:
**AT BE CH CY DE DK ES FI FR GB GR IE IT LI LU MC NL PT SE TR**

(30) Priorité: **03.05.2001 FR 0105914**

(43) Date de publication de la demande:
**04.12.2002 Bulletin 2002/49**

(73) Titulaire: **ARKEMA**
**92800 Puteaux (FR)**

(72) Inventeurs:
- **Lacroix, Christophe**
  **27700 Harquency (FR)**
- **Linemann, Reinhard**
  **27300 Bernay (FR)**
- **Blondel, Philippe**
  **27300 Bernay (FR)**
- **Lermat, Yves**
  **27300 Bernay (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
- **PATENT ABSTRACTS OF JAPAN vol. 1998, no. 06, 30 avril 1998 (1998-04-30) & JP 10 036628 A (KANEGAFUCHI CHEM IND CO LTD), 10 février 1998 (1998-02-10)**
- **PATENT ABSTRACTS OF JAPAN vol. 1996, no. 06, 28 juin 1996 (1996-06-28) & JP 08 048823 A (SANYO CHEM IND LTD), 20 février 1996 (1996-02-20)**
- **PATENT ABSTRACTS OF JAPAN vol. 017, no. 689 (C-1143), 16 décembre 1993 (1993-12-16) & JP 05 230301 A (TORAY IND INC), 7 septembre 1993 (1993-09-07)**
- **PATENT ABSTRACTS OF JAPAN vol. 1997, no. 05, 30 mai 1997 (1997-05-30) & JP 09 003339 A (CALP CORP;AMTEX:KK), 7 janvier 1997 (1997-01-07)**
- **PATENT ABSTRACTS OF JAPAN vol. 009, no. 052 (C-269), 6 mars 1985 (1985-03-06) & JP 59 191752 A (MITSUBISHI GAS KAGAKU KK), 30 octobre 1984 (1984-10-30)**
- **DATABASE WPI Section Ch, Week 199223 Derwent Publications Ltd., London, GB; Class A26, AN 1992-187555 XP002184409 & JP 04 114061 A (ASAHI CHEM IND CO LTD), 15 avril 1992 (1992-04-15)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 262 527 B1

## Description

[Domaine de l'invention]

La présente invention concerne une composition de polymères antistatiques et plus précisément une composition comprenant un polymère thermoplastique (D) et un mélange constitué d'un copolymère (A) à blocs polyamides et blocs polyéthers et un polymère ou un oligomère (B) comprenant dans sa chaîne au moins une fonction ionique. Il s'agit de donner au polymère thermoplastique des propriétés antistatiques permanentes. De plus c'est une amélioration par rapport à un simple ajout de sels de faible masse ou par rapport à des agents antistatiques connus. La formation et la rétention de charges d'électricité statique à la surface de la plupart des matières plastiques sont connues. La présence d'électricité statique sur des films thermoplastiques conduit par exemple ces films à se coller les uns sur les autres rendant leur séparation difficile. La présence d'électricité statique sur des films d'emballage peut provoquer l'accumulation de poussières sur les objets à emballer et ainsi gêner leur utilisation. L'électricité statique peut aussi endommager des microprocesseurs ou des constituants de circuits électroniques. L'électricité statique peut aussi provoquer la combustion ou l'explosion de matières inflammables telles que par exemple les billes de polystyrène expansible qui contiennent du pentane.

L'art antérieur a décrit des agents antistatiques tels que des surfactants ioniques du type amines ethoxylées ou sulfonates qu'on ajoute dans des polymères. Cependant les propriétés antistatiques des polymères dépendent de l'humidité ambiante et elles ne sont pas permanentes puisque ces agents migrent à la surface des polymères et disparaissent. Il a alors été proposé comme agents antistatiques des polymères ou des oligomères, ces agents ont l'avantage de ne pas migrer et donc de donner des propriétés antistatiques permanentes et de plus indépendantes de l'humidité ambiante. Les compositions de l'invention sont de ce type.

[l'art antérieur et le problème technique]

La demande de brevet japonais **JP 60 170 646 A** publiée le 4 septembre 1985 décrit des compositions constituées de 0,01 à 50 parties de polyéther bloc amide et de 99.99 à 50 parties de polystyrène, elles sont utiles pour faire des pièces de glissement et des pièces résistant à l'usure. Les propriétés antistatiques ne sont pas citées.

La demande de brevet **EP 167 824** publiée le 15 janvier 1986 décrit des compositions similaires aux précédentes et selon une forme de l'invention le polystyrène peut être mélangé avec un polystyrène fonctionnalisé par un anhydride carboxylique insaturé. Ces compositions sont utiles pour faire des pièces injectées. Les propriétés antistatiques ne sont pas citées.

La demande de brevet japonais **JP 60 023 435 A** publiée le 6 février 1985 décrit des compositions antistatiques comprenant 5 à 80% de polyétheresteramide et 95 à 20% d'une résine thermoplastique choisie entre autres parmi le polystyrène, l'ABS et le PMMA, cette résine étant fonctionnalisée par l'acide acrylique ou l'anhydride maléique. La quantité de polyétheresteramide dans les exemples est de 30% en poids des compositions.

Le brevet **EP 242 158** décrit des compositions antistatiques comprenant 1 à 40% de polyétheresteramide et 99 à 60% d'une résine thermoplastique choisie parmi les résines styrèniques, le PPO et le polycarbonate. Selon une forme préférée les compositions comprennent aussi un polymère vinylique fonctionnalisé par un acide carboxylique pouvant être par exemple un polystyrène modifié par l'acide méthacrylique.

La demande de brevet **WO 0110951** décrit une composition comprenant pour 100 parties en poids :

- 99 à 60 parties d'un polymère styrènique,
- 1 à 40 parties d'un mélange de deux polymères,
- l'un étant un copolymère à blocs polyamide et blocs polyéther comprenant essentiellement des motifs oxyde d'éthylène $-(C_2H_4-O)-$,
- l'autre étant un compatibilisant choisi parmi les copolymères de faible masse du styrène et d'un anhydride d'acide carboxylique insaturé, les copolymères de l'éthylène et d'un anhydride d'acide carboxylique insaturé, les copolymères de l'éthylène et d'un époxyde insaturé, les copolymères blocs SBS ou SIS greffés par un acide carboxylique ou un anhydride d'acide carboxylique insaturé et leurs mélanges,
- le rapport en poids du copolymère à blocs polyamide et blocs polyéther sur le compatibilisant étant compris entre 2 et 10.

Le brevet **EP 829 520** décrit des substrats tels que du PVC, du HDPE, du LLDPE, du polypropylène, de l'ABS et du polystyrène qu'on rend antistatique en y ajoutant un mélange antistatique constitué d'un copolymère à blocs polyamide et blocs polyéther, d'un sel tel que le perchlorate de sodium et d'un matériau fibreux ou qui forme des fibres au cours de l'introduction du mélange dans le substrat. La proportion du mélange antistatique en poids est de 0,1 à 15% et de préférence 1 à 15% du substrat. La proportion en poids du sel est de 0,05 à 10% et de préférence 0,5 à

5% de la quantité de copolymère à blocs polyamide et blocs polyéther. Le rapport de la quantité de fibres et de copolymère à blocs polyamide et blocs polyéther est en poids de 20/1 à 1/10 et de préférence 10/1 à 1/3. Dans l'exemple 19 on ajoute 3,84g de copolymère à blocs polyamide et blocs polyéther, 0,16g de perchlorate de sodium et 4g de fibres de PA 6 dans 191,8g de polystyrène. Ceci correspond à environ 4% de mélange antistatique dans 96% de polystyrène, les fibres représentant la moitié du mélange. Dans l'exemple 20 on ajoute 4,8g de copolymère à blocs polyamide et blocs polyéther, 0,2g de perchlorate de sodium et 5g de fibres de PA 6 dans 189g de polystyrène. Ceci correspond à environ 5% de mélange antistatique dans 95% de polystyrène, les fibres représentant la moitié du mélange. Dans ces deux exemples les résistivités de surface sont de l'ordre de $10^{11}$ Ohms/□.

On a maintenant trouvé des compositions antistatiques beaucoup plus performantes, c'est à dire que dans un polymère thermoplastique (D) au lieu d'y ajouter un copolymère (A) à blocs polyamides et blocs polyéthers et éventuellement des sels et des fibres on y ajoute un copolymère (A) à blocs polyamides et blocs polyéthers et un polymère ou un oligomère (B) comprenant dans sa chaîne au moins une fonction ionique.

L'art antérieur a décrit des polymères ou oligomères (B) contenant comme fonction ionique un groupement fonctionnel sulfoné, mais pas en combinaison avec un copolymère à blocs polyamides et blocs polyéthers dans un polymère thermoplastique (D) pour le rendre antistatique.

Le brevet **US 3 296 204** décrit des fibres de polyamide linéaire obtenu par la réaction de l'acide 5-sulfoisophtalique avec une diamine suivie de la polycondensation avec un amino acide ou un sel de diamine et de diacide tel que l'hexaméthylène adipate. Ces fibres ont une bonne aptitude à la teinture et absorbent l'humidité comme les fibres naturelles.

La demande de brevet **JP 11 029 685 A** publiée le 2 février 1999 décrit des résines acryliques antistatiques contenant des polyétheresters obtenus par condensation de polyoxyalkylèneglycol et de diacides carboxyliques. Une partie de ces diacides contient des groupes sulfoniques.

La demande de brevet **JP 08 208 830 A** publiée le 13 août 1996 décrit des élastomères hydrophiles contenant des sels de l'acide 5-sulfoisophtalique (SIPNa désignant le sel de sodium de l'acide sulfoisophtalique) et des adducts de l'oxyde d'éthylène sur un diol aromatique.

Le brevet **US 5 096 995** décrit des polyétheresteramides ayant deux types de blocs polyéther à savoir des blocs polyéthers de type polyéthylène glycol et des blocs qui sont des adducts de l'oxyde d'éthylène sur un diol aromatique. Le limiteur de chaîne des blocs polyamides est un diacide carboxylique, il est cité des diacides portant un groupe sulfonate tel que le sel de sodium de l'acide sulfoisophtalique et des diacides non substitués mais on préfère utiliser des acides non substitués tels que l'acide téréphtalique, l'acide isophtalique, l'acide 1,4-cyclohexanedicarboxylique, l'acide sébacique, l'acide adipique et l'acide decanedicarboxylique. Aucun des exemples n'utilise de diacides portant des groupes sulfonates.

La demande de brevet **JP 05 140 541 A** publiée le 8 juin 1993 décrit des polyétheresteramides ayant des blocs polyamides constitués par la condensation du caprolactame en présence du sel de sodium de l'acide 3-sulfoisophtalique et des blocs polyéther qui sont des adducts de l'oxyde d'éthylène sur le bisphénol A.

Le brevet **EP 613 919** décrit des polyétheresteramides ayant des blocs polyéther qui sont des adducts de l'oxyde d'éthylène sur le bisphénol A. Le limiteur de chaîne des blocs polyamide est un diacide carboxylique, il est cité des diacides portant un groupe sulfonate tel que le sel de sodium de l'acide 3-sulfoisophtalique et des diacides non substitués tels que l'acide téréphtalique, l'acide isophtalique, l'acide sébacique, l'acide adipique et l'acide decanedicarboxylique. Aucun des exemples n'utilise de diacides portant des groupes sulfonates. De plus, l'avantage spécifique apporté par l'incorporation de groupement ioniques, tel que les groupements sulfonates, dans la chaîne de polyétheresteramide pour améliorer les propriétés antistatiques n'est pas décrit. Tel que montré dans ce brevet, l'utilisation d'un adduct de bisphénol-A joue un rôle de stabilisation thermique. En revanche, les propriétés antistatiques intrinsèques du produit ne sont pas améliorées. Les blocs polyamides décrits dans les exemples sont constitués de caprolactame. Ces polyétheresteramides sont ajoutés à différents polymères thermoplastiques pour les rendre antistatiques mais il est nécessaire d'ajouter aussi des sels choisis parmi les halogénures de métaux alcalins ou alcalino terreux.

La demande de brevet **WO 0017262,** "Salt modified electrostatic dissipative polymers", décrit des oligomères de polyéther contenant principalement des sels de lithium, le SIPNa n'est pas revendiqué ni exemplifié. Le sel est introduit lors de la polymérisation.

[Brève description de l'invention]

La présente invention concerne une composition comprenant pour 100 parties en poids :

- 99 à 60 parties d'un polymère thermoplastique (D),
- 1 à 40 parties de (A) + (B) = (C)
- (A) étant un copolymère à blocs polyamides et blocs polyéther,
- (B) étant un polymère ou un oligomère comprenant dans sa chaîne au moins une fonction ionique et choisi parmi :

les polyamides,
les copolymères à blocs polyamides et blocs polyéther,
les polyesters ou polyesteramides thermoplastiques,
les copolymères à blocs polyesters et blocs polyéther,
les polyéthers,
les polyuréthanes.

L'invention concerne aussi les mélanges de (A) et (B) en tant que produit.

[Description détaillée de l'invention]

**A titre d'exemple de polymères thermoplastiques (D)** on peut citer les polyoléfines, les polyamides, les polymères fluorés, les polyesters saturés, le polycarbonate, les résines styréniques, le PMMA, les polyuréthanes thermoplastiques (TPU), les copolymères à blocs polyamides, les copolymères à blocs polyester et blocs polyéther, le PVC, les copolymères de l'éthylène et de l'alcool vinylique (EVOH) et les polycétones.

**Les copolymères (A) à blocs polyamides et blocs polyéthers** résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut utiliser avantageusement **trois types de blocs polyamides.** Selon un **premier type** les séquences polyamides proviennent, par exemple, de la condensation d'acides alpha-oméga aminocarboxyliques, de lactames ou de diacides carboxyliques et diamines.

Selon un **deuxième type** les séquences polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine et sont de faible masse c'est-à-dire de $\overline{Mn}$ 400 à 800.

Selon un **troisième type** les séquences polyamides résultent de la condensation d'au moins un acide alpha oméga aminocarboxylique (ou un lactame), au moins une diamine et au moins un diacide carboxylique. Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne.

Avantageusement les blocs polyamides du premier type sont en polyamide 12 ou en polyamide 6.

Dans les deuxième et troisième types les différents constituants de la séquence polyamide et leur proportion sont choisis pour obtenir une température de fusion inférieure à 150°C et avantageusement comprise entre 90 et

135°C. Des copolyamides à basse température de fusion sont décrits dans les brevets US 4 483 975, DE 3 730 504, US 5 459 230. On peut reprendre les mêmes proportions des constituants pour les blocs polyamides.

Des exemples de séquences polyamides du deuxième type sont celles obtenues par condensation du lauryllactame en présence d'acide adipique, d'acide sébacique ou d'acide dodécanédioïque et de masse $\overline{Mn}$ 750 ont une température de fusion de 127 - 130°C.

A titre d'exemples de séquences polyamides du troisième type on peut citer les suivantes :

a) 6.6 / Pip. 10 / 12
dans laquelle
6.6 désigne des motifs hexaméthylèneadipamide (l'hexaméthylènediamine condensée avec l'acide adipique).
Pip. 10 désigne des motifs résultant de la condensation de la pipérazine et de l'acide sébacique.
12 désigne des motifs résultant de la condensation du lauryllactame.
Les proportions en poids sont respectivement
25 à 35 / 20 à 30 20 à 30 / le total étant 80 et avantageusement 30 à 35 / 22 à 27 / 22 à 27 / le total étant 80.
Par exemple les proportions 32 / 24 / 24 / conduisent à une température de fusion de 122 à 137°C.

b) 6.6/6.10/11/12
dans laquelle
6.6 désigne l'hexaméthylène diamine condensée avec l'acide adipique
6.10 désigne l'hexaméthylène diamine condensée avec l'acide sébacique
11 désigne des motifs résultant de la condensation de l'acide aminoundécanoïque
12 désigne des motifs résultant de la condensation du lauryllactame.
Les proportions en poids sont respectivement
10 à 20 / 15 à 25 / 10 à 20 / 15 à 25 le total étant 70 et avantageusement :

12 à 16 / 18 à 25 / 12 à 16 / 18 à 25 le total étant 70.

Par exemple les proportions 14 / 21 / 14 / 21 / conduisent à une température de fusion de 119 à 131°C.

Les blocs polyamides sont obtenus en présence d'un diacide ou d'une diamine limiteur de chaîne si on veut des blocs polyamides à extrémités acides ou amines. Si les précurseurs comprennent déjà un diacide ou une diamine il suffit par exemple de l'utiliser en excès.

A titre d'exemple d'acide alpha omega amino carboxylique aliphatique on peut citer les acides aminocaproïques, amino-7-heptanoïque, amino-11-undécanoïque et amino-12-dodécanoïque.

A titre d'exemple de lactame on peut citer le caprolactame, l'oenantholactame et le lauryllactame.

A titre d'exemple de diamines aliphatiques on peut citer l'hexaméthylènediamine, la dodécaméthylènediamine et la triméthylhexaméthylène diamine.

A titre d'exemple de diacides cycloaliphatiques on peut citer l'acide 1,4-cyclohexyldicarboxylique.

A titre d'exemple de diacides aliphatiques on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - $\alpha,\omega$ diacides.

A titre d'exemple de diacides aromatiques on peut citer les acides téréphtalique (T) et isophtalique (I).

Les diamines cycloaliphatiques peuvent être les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

Les blocs polyéthers peuvent représenter 5 à 85 % en poids du copolymère à blocs polyamides et polyéthers. Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG c'est à dire ceux constitués de motifs oxyde d'éthylène, des blocs PPG c'est à dire ceux constitués de motifs oxyde de propylène et des blocs PTMG c'est à dire ceux constitués de motifs tetraméthylène glycols appelés aussi polytétrahydrofurane. On utilise avantageusement des blocs PEG ou des blocs obtenus par oxyéthylation de bisphenols, tels que par exemple le bisphenol A. Ces derniers produits sont décrits dans le brevet EP 613 919.

Les blocs polyéthers peuvent aussi être constitués d'amines primaires éthoxylées. On utilise avantageusement aussi ces blocs. A titre d'exemple d'amines primaires éthoxylées on peut citer les produits de formule :

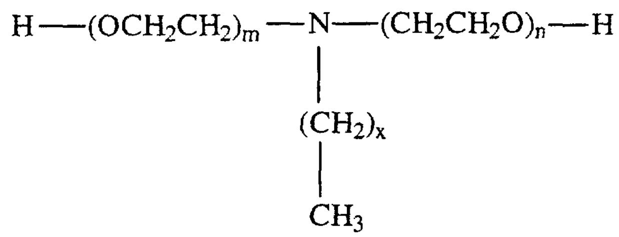

dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

La quantité de blocs polyéther dans ces copolymères à blocs polyamides et blocs polyéthers est avantageusement de 10 à 70% en poids du copolymère et de préférence de 35 à 60%.

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

La masse molaire en nombre $\overline{Mn}$ des séquences polyamides est comprise entre 500 et 10000 et de préférence entre 500 et 4000 sauf pour les blocs polyamides du deuxième type. La masse $\overline{Mn}$ des séquences polyéther est comprise entre 100 et 6 000 et de préférence entre 200 et 3 000.

Ces polymères à blocs polyamides et blocs polyéthers qu'ils proviennent de la copolycondensation de séquences polyamides et polyéthers préparées auparavant ou d'une réaction en une étape présentent, par exemple, une viscosité intrinsèque entre 0,8 et 2,5 mesurée dans le métacrésol à 250° C pour une concentration initiale de 0,8 g/100 ml.

**S'agissant de leur préparation** les copolymères de l'invention peuvent être préparés par tout moyen permettant d'accrocher les blocs polyamide et les blocs polyéther. En pratique, on utilise essentiellement deux procédés l'un dit en 2 étapes, l'autre en une étape. Dans le procédé en deux étapes on fabrique d'abord les blocs polyamides puis dans une deuxième étape on accroche les blocs polyamides et les blocs polyéthers. Dans le procédé en une étape on mélange les précurseurs de polyamide, le limiteur de chaînes et le polyéther; on obtient alors un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère. Que ce soit en une ou deux étapes il est avantageux d'opérer en présence d'un catalyseur. On peut utiliser les catalyseurs décrits dans les brevets US 4 331 786, US 4 115 475, US 4 195 015, US 4 839 441, US 4 864 014, US 4 230 838 et US 4 332 920. Dans le procédé en une étape on fabrique aussi des blocs polyamide, c'est pourquoi on a écrit au début de ce paragraphe que les copolymères de l'invention pouvaient être préparés par tout moyen d'accrocher les blocs polyamides et les blocs polyéthers.

**On décrit maintenant en détail les procédés de préparation dans lesquels les blocs polyamides sont à extrémités carboxyliques et le polyéther est un polyétherdiol.**

Le procédé en 2 étapes consiste d'abord à préparer les blocs polyamide à extrémités carboxyliques par condensation des précurseurs de polyamide en présence d'un diacide carboxylique limiteur de chaîne puis dans une deuxième étape à ajouter le polyéther et un catalyseur. Si les précurseurs de polyamide ne sont que des lactames ou des acides alpha oméga aminocarboxyliques, on ajoute un diacide carboxylique. Si les précurseurs comprennent déjà un diacide carboxylique on l'utilise en excédent par rapport à la stoechiométrie des diamines. La réaction se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et un catalyseur. On peut ajouter le polyéther en une ou plusieurs fois, de même pour le catalyseur. Selon une forme avantageuse on ajoute d'abord le polyéther, la réaction des extrémités OH du polyéther et des extrémités COOH du polyamide commence avec formations de liaison ester et élimination d'eau ; On élimine le plus possible l'eau du milieu réactionnel par distillation puis on introduit le catalyseur pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur.

La fin de la réaction est déterminée par la valeur du couple ou de la puissance cible. Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et l' hafnium.

A titre d'exemple de dérivé on peut citer les tétraalcoxydes qui répondent à la formule générale $M(OR)_4$, dans laquelle M représente le titane, le zirconium ou l' hafnium et les R, identiques ou différents, désignent des radicaux alcoyles, linéaires ou ramifiés, ayant de 1 à 24 atomes de carbone.

Les radicaux alcoyles en $C_1$ à $C_{24}$ parmi lesquels sont choisis les radicaux R des tétraalcoxydes utilisés comme catalyseurs dans le procédé suivant l'invention sont par exemple tels que méthyle, éthyle, propyl, isopropyl, butyle, éthylhexyl, décyl, dodécyl, hexadodécyl. Les catalyseurs préférés sont les tétraalcoxydes pour lesquels les radicaux R, identiques ou différents, sont des radicaux alcoyles en $C_1$ à $C_8$. Des exemples de tels catalyseurs sont notamment $Z_r(OC_2H_5)_4$, $Z_r$ (O-iso$C_3H_7)_4$, $Z_r(OC_4H_9)_4$, $Z_r(OC_5H_{11})_4$, $Z_r(OC_6H_{13})_4$, $H_f(OC_2H_5)_4$, $H_f(OC_4H_9)_4$, $H_f$(O-iso$C_3H_7)_4$.

Le catalyseur utilisé dans ce procédé suivant l'invention peut consister uniquement en un ou plusieurs des tétraalcoxydes de formule $M(OR)_4$ définis précédemment. Il peut encore être formé par l'association d'un ou plusieurs de ces tétraalcoxydes avec un ou plusieurs alcoolates alcalins ou alcalino-terreux de formule $(R_1O)_pY$ dans laquelle $R_1$ désigne un reste hydrocarboné, avantageusement un reste alcoyle en $C_1$ à $C_{24}$, et de préférence en $C_1$ à $C_8$, Y représente un métal alcalin ou alcalino-terreux et p est la valence de Y. Les quantités d'alcoolate alcalin ou alcalino-terreux et de tétraalcoxydes de zirconium ou d'hafnium que l'on associe pour constituer le catalyseur mixte peuvent varier dans de larges limites. On préfère toutefois utiliser des quantités d'alcoolate et de tétraalcoxydes telles que la proportion molaire d'alcoolate soit sensiblement égale à la proportion molaire de tétraalcoxyde.

La proportion pondérale de catalyseur, c'est-à-dire du ou des tétraalcoxydes lorsque le catalyseur ne renferme pas d'alcoolate alcalin ou alcalino-terreux ou bien de l'ensemble du ou des tétraalcoxydes et du ou des alcoolates alcalins ou alcalino-terreux lorsque le catalyseur est formé par l'association de ces deux types de composés, varie avantageusement de 0,01 à 5 % du poids du mélange du polyamide dicarboxylique avec le polyoxyalcoylène glycol, et se situe de préférence entre 0,05 et 2 % de ce poids.

A titre d'exemple d'autres dérivés, on peut citer aussi les sels du métal (M) en particulier les sels de (M) et d'un acide organique et les sels complexes entre l'oxyde de (M) et/ou l'hydroxyde de (M) et un acide organique. Avantageusement l'acide organique peut être l'acide formique, l'acide acétique, l'acide propionique, l'acide butyrique, l'acide valérique, l'acide caproïque, l'acide caprylique, l'acide lauryque, l'acide myristique, l'acide palmitique, l'acide stéarique, l'acide oléique, l'acide linoléique, l'acide linolénique, l'acide cyclohexane carboxylique, l'acide phénylacétique, l'acide benzoïque, l'acide salicylique, l'acide oxalique, l'acide malonique, l'acide succinique, l'acide glutarique, l'acide adipique, l'acide maléique, l'acide fumarique, l'acide phtalique et l'acide crotonique. Les acides acétique et propionique sont particulièrement préférés. Avantageusement M est le zirconium. Ces sels peuvent s'appeler sels de zirconyle. La demanderesse sans être liée par cette explication pense que ces sels de zirconium et d'un acide organique ou les sels complexes cités plus haut libèrent $ZrO^{++}$ au cours du procédé. On utilise le produit vendu sous le nom d'acétate de zirconyle. La quantité à utiliser est la même que pour les dérivés $M(OR)_4$.

Ce procédé et ces catalyseurs sont décrits dans les brevets US 4,332,920, US 4,230,838, US 4,331,786, US 4,252,920, JP 07145368A, JP 06287547A, et EP 613919.

S'agissant du procédé en une étape on mélange tous les réactifs utilisés dans le procédé en deux étapes c'est-à-dire les précurseurs de polyamide, le diacide carboxylique limiteur de chaîne, le polyéther et le catalyseur. Il s'agit des même réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut. La pression s'établit entre 5 et 30 bars. Quand elle n'évolue plus, on met le réacteur sous pression réduite tout en maintenant une agitation vigoureuse des réactifs fondus. La réaction est suivie comme précédemment pour le procédé en deux étapes.

Le catalyseur utilisé dans le procédé en une étape est de préférence un sel du métal (M) et d'un acide organique ou un sel complexe entre l'oxyde de (M) et/ou l'hydroxyde de (M) et un acide organique.

**On décrit maintenant en détail les procédés de préparation dans lesquels les blocs polyamides sont à extrémités carboxyliques et le polyéther est un polyétherdiamine.**

Le procédé en 2 étapes consiste d'abord à préparer les blocs polyamide à extrémités carboxyliques par condensation des précurseurs de polyamide en présence d'un diacide carboxylique limiteur de chaîne puis dans une deuxième étape à ajouter le polyéther et éventuellement un catalyseur. Si les précurseurs de polyamide ne sont que des lactames ou des acides alpha oméga aminocarboxyliques, on ajoute un diacide carboxylique. Si les précurseurs

comprennent déjà un diacide carboxylique on l'utilise en excédent par rapport à la stoechiométrie des diamines. La réaction se fait habituellement entre 180 et 300°C, de préférence 200 à 260°C la pression dans le réacteur s'établit entre 5 et 30 bars, on la maintient environ 2 heures. On réduit lentement la pression en mettant le réacteur à l'atmosphère puis on distille l'eau excédentaire par exemple une heure ou deux.

Le polyamide à extrémités acide carboxylique ayant été préparé on ajoute ensuite le polyéther et éventuellement un catalyseur. On peut ajouter le polyéther en une ou plusieurs fois, de même pour le catalyseur. Selon une forme avantageuse on ajoute d'abord le polyéther, la réaction des extrémités $NH_2$ du polyéther et des extrémités COOH du polyamide commence avec formation de liaison amides et élimination d'eau ; On élimine le plus possible l'eau du milieu réactionnel par distillation puis on introduit le catalyseur éventuel pour achever la liaison des blocs polyamide et des blocs polyéther. Cette deuxième étape s'effectue sous agitation de préférence sous un vide d'au moins 5 mm Hg (650 Pa) à une température telle que les réactifs et les copolymères obtenus soient à l'état fondu. A titre d'exemple cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible. Le catalyseur est défini comme étant tout produit permettant de faciliter la liaison des blocs polyamide et des blocs polyéther. L'homme de l'art préfère la catalyse protique.

S'agissant du procédé en une étape on mélange tous les réactifs utilisés dans le procédé en deux étapes c'est-à-dire les précurseurs de polyamide, le diacide carboxylique limiteur de chaîne, le polyéther et le catalyseur. Il s'agit des mêmes réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

On ferme et on chauffe le réacteur sous agitation comme dans la première étape du procédé en deux étapes décrit plus haut. La pression s'établit entre 5 et 30 bars. Quand elle n'évolue plus on met le réacteur sous pression réduite tout en maintenant une agitation vigoureuse des réactifs fondus. La réaction est suivie comme précédemment pour le procédé en deux étapes.

A titre d'exemple de copolymères (A) on peut citer les PEBA commercialisés sous la marque PEBAX® et PLATAMID®. On peut utiliser un mélange de copolymères (A).

**S'agissant de (B) et d'abord de la fonction ionique** on peut citer à titre d'exemple les diacides ou les diamines sulfonés de preférence l'acide 2-sulfoisophtalique, l'acide 4-sulfoisophtalique, l'acide 5-sulfoisophtalique, l'acide 2-sulfothéréphthalique, l'acide 2,6-dicarboxynaphtalène-4-sulfonique, l'acide 2,7-dicarboxynaphtalène-4-sulfonique et l'acide diphenylsulfotéréphtalique. Avantageusement le diacide sulfoné est choisi parmi les sulfonates d'acides dicarboxyliques et de préférence les sels de métaux alcalins ou d'ammonium de diacides aromatiques. Il s'agit par exemple des sels de sodium, de potassium, de lithium et d'ammonium des acides et / ou des esters d'alkyle de ces acides carboxyliques.

Avantageusement le sulfonate est choisi parmi les produits de formules suivantes qui sont respectivement le sel de l'acide 5-sulfoisophtalique et le sel de l'acide 4-sulfoisophtalique :

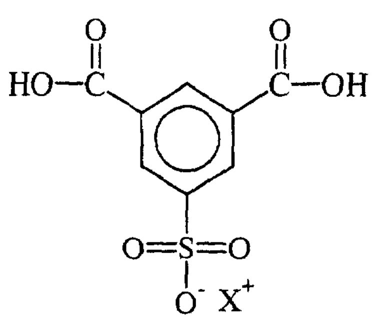

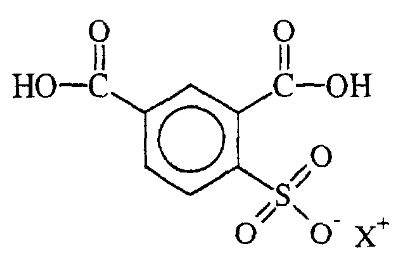

X : Na, K, Li

**S'agissant des polyamides (B)** ce sont les produits de condensation d'au moins un diacide contenant une fonction ionique avec au moins une diamine ou d'au moins un diacide avec une diamine contenant une fonction ionique. (B) peut comprendre aussi d'autres motifs choisis parmi les diacides, les diamines et les acides alpha omega aminocarboxyliques ou leurs lactames éventuels correspondants. Le terme polyamide désigne aussi bien les polyamides

que les copolyamides. Au sens strict un polyamide résulte de la condensation soit d'un acide alpha omega aminocarboxylique (ou un lactame) soit d'une diamine et d'un diacide. Si on condense plusieurs diamines différentes avec un ou plusieurs diacides on obtient un copolyamide. De même si on condense au moins deux acides alpha amino carboxyliques différents ou un acide alpha amino carboxylique avec un diacide et une diamine. Des exemples de diacides, de diamines, de lactames et d'acides alpha amino carboxyliques ont été cités plus haut. Avantageusement $\overline{Mn}$ est supérieure à 500 g/mol et de préférence supérieure à 2000 g/mol.

A titre d'exemple de polyamide (B) on peut citer le produit de condensation du caprolactame et du SIPNa ce dernier étant utilisé comme limiteur de chaîne du PA 6. On peut encore citer le produit de condensation du caprolactame, de l'hexamethylène diamine, de l'acide adipique, de l'acide isophtalique et du SIPNa. On peut préparer le polyamide (B) par les procédés habituels de synthèse des polyamides. A titre d'exemple on peut utiliser la première étape du procédé de synthèse en deux étapes des copolymères (A) à blocs polyamides et blocs polyéthers en l'appliquant aux monomères du polyamide (B).

On peut utiliser un mélange de polyamides (B).

**S'agissant des copolymères (B) à blocs polyamides et blocs polyéthers,** ils peuvent être choisis parmi les mêmes copolymères que les copolymères (A) mais ils contiennent une fonction ionique dans leur chaîne. Cette fonction peut être dans les blocs polyamides et/ou dans les blocs polyéthers.

On peut utiliser avantageusement **trois types de blocs polyamides.** Selon un **premier type** les séquences (ou blocs) polyamides proviennent, par exemple, de la condensation d'un acide alpha-oméga aminocarboxylique ou du lactame éventuel correspondant en présence d'un diacide carboxylique sulfoné comme limiteur de chaîne. Selon une variante de ce premier type les blocs polyamides proviennent de la condensation d'au moins un diacide carboxylique sulfoné et d'au moins une diamine. On ne sortirait pas du cadre de l'invention si le bloc polyamide comprenait aussi au moins un diacide carboxylique en plus du diacide sulfoné.

Selon un **deuxième type** les séquences polyamides résultent de la condensation d'un ou plusieurs acides alpha oméga aminocarboxyliques et/ou d'un ou plusieurs lactames ayant de 6 à 12 atomes de carbone en présence d'un diacide carboxylique sulfoné comme limiteur de chaîne et sont de faible masse c'est-à-dire de $\overline{Mn}$ 400 g/mol à 800 g/mol . On ne sortirait pas du cadre de l'invention si le bloc polyamide comprenait aussi au moins une diamine et/ou un diacide carboxylique différent du diacide carboxylique sulfoné.

Selon un **troisième type** les séquences polyamides résultent de la condensation d'au moins un acide alpha oméga aminocarboxylique (ou un lactame), au moins une diamine et au moins un diacide carboxylique sulfoné. On ne sortirait pas du cadre de l'invention si le bloc polyamide comprenait aussi au moins un diacide carboxylique différent du diacide carboxylique sulfoné.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence d'un diacide carboxylique sulfoné limiteur de chaîne.

Les blocs polyéthers de ces copolymères (B) peuvent être choisis parmi les mêmes blocs que ceux du copolymère (A). Selon une variante les blocs polyéthers sont des polyétherdiols et résultent de l'enchainement de blocs polyéthers, par exemple les blocs polyéthers tels que décrits plus haut, et d'un diacide carboxylique contenant une fonction ionique. Avantageusement les proportions sont telles qu'il y ait un bloc polyétherdiol de plus que de diacide carboxylique fonctionnel pour que le diacide carboxylique fonctionnel soit à l'intérieur de la chaîne et qu'ainsi la chaîne soit à terminaisons OH.

On peut utiliser un mélange de copolymères (B) à blocs polyamides et blocs polyéthers.

**S'agissant des polyesters et des polyesteramides thermoplastiques (B) et d'abord des polyesters** ce terme désigne des polymères qui sont des produits saturés de condensation de glycols, d'au moins un diacide carboxylique contenant une fonction ionique par exemple sulfoné et éventuellement d'autres acides dicarboxyliques (différents du diacide carboxylique sulfoné) ou de leurs dérivés. Le polyester peut comprendre plusieurs de ces autres acides dicarboxyliques. De préférence les autres diacides sont des acides dicarboxyliques aromatiques ayant de 8 à 14 atomes de carbone et le glycol est choisi dans le groupe constitué du neopentylglycol, du cyclohexanediméthanol et des glycols aliphatiques de formule $HO(CH_2)_nOH$ dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

A titre d'exemple d'acides aromatiques dicarboxyliques on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique). A titre d'exemple de glycols on peut citer l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol et le 1,4-cyclohexylène dimethanol. Le MFI de ces polyesters, mesuré

à 250°C sous 2,16 kg, peut varier de 2 à 100 et avantageusement de 10 à 80. "MFI" (abréviation de Melt Flow Index) désigne l'indice de fluidité à l'état fondu. **Quant aux polyesteramides** ce sont les polyesters précédents mais comprenant en plus dans leur chaîne des diamines telles que par exemple de l'hexaméthylène diamine.

On peut aussi utiliser un mélange de différents polyesters ou différents polyesteramides (B) ou un mélange d'un ou plusieurs polyesters avec un ou plusieurs polyesteramides.

**S'agissant des copolymères (B) à blocs polyesters et blocs polyéthers** ils sont constitués de blocs polyéthers souples qui sont les restes de polyétherdiols et de segments rigides (blocs polyesters) qui résultent de la réaction d'au moins un diacide carboxylique avec au moins un motif diol court allongeur de chaine. Les blocs polyesters et les blocs polyéthers sont reliés par des liaisons esters résultant de la réaction des fonctions acides de l'acide avec les fonctions OH du polyétherdiol. Le diol court allongeur de chaîne peut être choisi parmi les glycols cités plus haut dans la description des polyesters thermoplastiques (B). Ces copolyétheresters sont des élastomères thermoplastiques. **Selon une première forme de l'invention** les blocs polyesters résultent de la réaction d'un diol court allongeur de chaîne avec au moins un diacide carboxylique contenant une fonction ionique par exemple sulfoné et éventuellement d'autres diacides carboxyliques (différents du diacide carboxylique sulfoné) ou de leurs dérivés. Ces autres acides dicarboxyliques ont été cités plus haut dans la description des polyesters thermoplastiques (B). Les blocs polyéthers de ces copolymères (B) peuvent être choisis parmi les mêmes blocs polyéthers que ceux du copolymère (A). **Selon une deuxième forme de l'invention** les blocs polyéthers de ces copolymères (B) sont des polyétherdiols et résultent de l'enchainement de blocs polyéthers, par exemple les blocs polyéthers du copolymère (A) tels que décrits plus haut, et d'un diacide carboxylique contenant une fonction ionique. Avantageusement les proportions sont telles qu'il y ait un bloc polyétherdiol de plus que de diacide carboxylique fonctionnel pour que le diacide carboxylique fonctionnel soit à l'intérieur de la chaîne et qu'ainsi la chaîne soit à terminaisons OH.

On peut utiliser un mélange de plusieurs copolymères (B) à blocs polyesters et blocs polyéthers.

**S'agissant des polyéthers (B)** ce sont avantageusement des polyétherdiols et ils résultent de l'enchaînement de blocs polyéthers, par exemple les blocs polyéthers du copolymère (A) tels que décrits plus haut, et d'un diacide carboxylique contenant une fonction ionique. Avantageusement les proportions sont telles qu'il y ait un bloc polyétherdiol de plus que de diacide carboxylique fonctionnel pour que le diacide carboxylique fonctionnel soit à l'intérieur de la chaîne et qu'ainsi la chaîne soit à terminaisons OH.

On peut utiliser un mélange de plusieurs polyéthers (B).

**S'agissant des polyuréthanes (B)** on peut distinguer les polyuréthanes rigides et les polyuréthanes élastomères. Les polyuréthanes rigides résultent de là réaction d'au moins un diisocyanate avec au moins un diol court, les polyuréthanes élastomères sont constitués de blocs polyethers souples qui sont des restes de polyetherdiols et de blocs rigides qui résultent de la réaction d'au moins un diisocyanate avec au moins un diol court. Le diol court allongeur de chaîne peut être choisi parmi les glycols cités plus haut dans la description des polyesters thermoplastiques (B). Les polyétherdiols peuvent être choisis parmi ceux cités comme blocs polyéthers de (A). **Selon une première forme de l'invention le diol court des polyuréthanes (B)** résulte de l'enchainement (i) d'au moins un diol choisi dans le groupe constitué du neopentylglycol, du cyclohexanediméthanol et des glycols aliphatiques de formule $HO(CH_2)_nOH$ dans laquelle n est un entier valant de 2 à 10 et (ii) d'au moins un diacide carboxylique contenant une fonction ionique. Avantageusement les proportions sont telles qu'il y ait un diol de plus que de diacide carboxylique fonctionnel pour que le diacide carboxylique fonctionnel soit à l'intérieur de la chaîne et qu'ainsi le diol court soit bien soit à terminaisons OH. **Selon une deuxième forme de l'invention les blocs polyéthers des polyuréthanes (B)** sont des polyétherdiols et résultent de l'enchainement de blocs polyéthers, par exemple les blocs polyéthers du copolymère (A) tels que décrits plus haut, et d'un diacide carboxylique contenant une fonction ionique. Avantageusement les proportions sont telles qu'il y ait un bloc polyétherdiol de plus que de diacide carboxylique fonctionnel pour que le diacide carboxylique fonctionnel soit à l'intérieur de la chaîne et qu'ainsi la chaîne soit à terminaisons OH.

On peut utiliser un mélange de plusieurs polyuréthanes (B).

L'antistatisme augmente avec la proportion de blocs polyethers dans (A), elle augmente aussi avec la proportion de motifs oxyde d'éthylène dans ces blocs polyethers. L'antistatisme augmente avec la quantité de fonctions ioniques contenues dans (B). Avantageusement **les proportions** de (D) sont de 95 à 85 parties pour respectivement 5 à 15 parties de (A)+(B). La proportion de (B) est avantageusement de 1 à 99 % en poids de (A)+(B) et de préférence de 5 à 20%.

Les compositions de l'invention sont fabriquées par mélange à l'état fondu des différents constituants (extrudeuses bivis, BUSS®, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des tubes, des plaques, des films ou des profilés.

Les compositions de l'invention peuvent comprendre des stabilisants, des antioxydants, des anti UV ou d'autres additifs.

[Exemples]

**Copolymère A : Polyétheresteramide**

Exemple A1 : Synthèse d'un polyétheresteramide PA12-PEG1500

Un mélange de 105 parties de lactame 12, 17.1 parties d'acide adipique, 0.3 parties d'IRGANOX 1010 et 9 parties d'eau a été placé dans un autoclave en acier inoxydable de 4 litres, qui a ensuite été rempli d'azote remplaçant l'air, suivi par un chauffage à 270 °C sous pression pendant 4 heures tout en agitant pour obtenir 122.1 parties d'oligomère polyamide avec des extrémités de chaîne carboxyliques ayant un poids moléculaire moyen en nombre de 1100 g/mol et une valeur d'acide de 110. L'oligomère polyamide a ensuite été mélangé avec 175 parties de polyoxyéthylène glycol ayant un poids moléculaire en nombre de 1500 g/mol et 0.5 partie d'acetate de zirconium, et le mélange a été chauffé à 245 °C pour effectuer une polymérisation pendant 5 heures sous pression réduite à moins de 1 mm Hg pour obtenir un polymère visqueux. Le polymère a ensuite été sorti sous forme d'un brin, qui a été pastillé pour obtenir le polyétheresteramide en tant que copolymère A. La viscosité relative du polymère obtenu était de 1.3 comme mesurée pour une solution à 0.5 % en poids dans du m-cresol à 25 °C.

La résistivité obtenue selon l'exemple A1 est :

| | |
|---|---|
| Résistivité volumique : Ohm.cm | 8.8 E+09 |
| Résistivité superficielle : Ohms/□ | 3.2 E+11 |

Exemple A2 : Synthèse d'un polyétheresteramide PA6-PEG 1500

Un mélange de 105 parties de lactame 6, 17.1 parties d'acide adipique, 0.3 parties d'IRGANOX 1010 et 9 parties d'eau a été placé dans un autoclave en acier inoxydable de 4 litres, qui a ensuite été rempli d'azote remplaçant l'air, suivi par un chauffage à 250 °C sous pression pendant 4 heures tout en agitant pour obtenir 122,1 parties d'oligomère polyamide avec des extrémités de chaîne carboxyles ayant un poids moléculaire moyen en nombre de 1100 g/mol et une valeur d'acide de 110. L'oligomère polyamide a ensuite été mélangé avec 175 parties de polyoxyéthylène glycol ayant un poids moléculaire en nombre de 1500 g/mol et 0.5 partie d'acetate de zirconium, et le mélange a été chauffé à 245 °C pour effectuer une polymérisation pendant 5 heures sous pression réduite à moins de 1 mm Hg pour obtenir un polymère visqueux. Le polymère a ensuite été sorti sous forme d'un brin, qui a été pastillé pour obtenir le polyétheresteramide en tant que copolymère A. La viscosité relative du polymère obtenu était de 1.3 comme mesurée pour une solution à 0.5 % en poids dans du m-cresol à 25 °C.

La résistivité obtenue selon l'exemple A2 est :

| | |
|---|---|
| Résistivité volumique : Ohm.cm | $8.9^{E}+09$ |
| Résistivité superficielle : Ohms/□ | $6.3^{E}+10$ |

Exemple A3 : Synthèse d'un polyétheresteramide PA6 - PEG-bisphenol A 2000 (brevet EP0613919)

Un mélange de 105 parties de lactame 6, 17.1 parties d'acide adipique, 0.3 parties d'IRGANOX 1010 et 7 parties d'eau a été placé dans un autoclave en acier inoxydable de 4 litres, qui a ensuite été rempli d'azote remplaçant l'air, suivi par un chauffage à 220 °C sous pression pendant 4 heures tout en agitant pour obtenir 117 parties d'oligomère polyamide avec des extrémités de chaîne carboxyles ayant un poids moléculaire moyen en nombre de 1100 g/mol et une valeur d'acide de 110. L'oligomère polyamide a ensuite été mélangé avec 225 parties du produit d'addition de l'oxyde d'éthylène sur le bisphénol A ayant un poids moléculaire en nombre de 2000 g/mol et 0.5 partie d'acétate de zirconium, et le mélange a été chauffé à 245 °C pour effectuer une polymérisation pendant 5 heures sous pression réduite à moins de 1 mm Hg pour obtenir un polymère visqueux. Le polymère a ensuite été sorti sous forme d'un brin, qui a été pastillé pour obtenir le polyétheresteramide en tant que copolymère A. La viscosité relative du polymère obtenu était de 1.2 comme mesurée pour une solution à 0.5 % en poids dans du m-cresol à 25 °C.

exemple A3

| | |
|---|---|
| Résistivité volumique : ohm.cm | $5^{E}8$ |

(suite)

| | |
|---|---|
| Résistivité superficielle : Ohms/☐ | 1E+9 |

Exemple A4 :

Polyétheresteramide à blocs PA 6 de $\overline{Mn}$ 1500 et blocs PEG de $\overline{Mn}$ 1500 de viscosité intrinsèque 1,2 à 1,25 et dureté shore D 42 preparé selon le procédé décrit dans le brevet US 4252920.

exemple A4

| | |
|---|---|
| Résistivité volumique : ohm.cm | 8.8 E+9 |
| Résistivité superficielle : Ohms/☐ | 3.2 E+11 |

**polymère (B) :**

Exemple B1 : Synthèse selon l'exemple 1 du brevet WO 0071603

On opère dans un réacteur de 4 litres de capacité, à trois tubulures : entrée de gaz, communication avec un système de distillation comprenant un condenseur relié à un récepteur de distillat ainsi qu'un agitateur à ancre.
Dans ce réacteur, on introduit : 339.0g de lactame 6, 196.2 g de sel d'acide adipique et d'hexaméthylènediamine, 187.34 g d'hexaméthylènediamine, 168.5 d'acide isophthalique, 161.0 de mono sel de l'acide 5- sulfo isophthalique (0.60 mole), et 22.5 g d'acide cinnamique et 50 g de l'eau.
Le réacteur est purgé à l'azote puis chauffé en 1 heure toutes vannes fermées jusqu'à 200°C de température matière, la pression est alors de 6 bars. A ce moment, on met l'agitation et la température matière est montée en 1 heure à 240 °C pendant 4 heures, la pression atteint à la fin des 4 heures de palier 18 bars et se stabilise, ce qui veut dire premièrement que tous les monomères réagissent et deuxièmement que l'équilibre de formation des amides est atteint.
On commence à ce moment la détente (pendant 90 minutes), la température matière à la fin de la détente est de 270°C. On fait passer un courant d'azote de 30l/h pendant 15 minutes et le copolymère est sorti du réacteur, recueilli dans un plateau refroidi ou sur une bande refroidie pour assurer une solidification rapide.
Le produit obtenu est légèrement jaune, friable, inodore. La Tg est de 89°C (mesuré par DSC : 10°K/min).

Exemple B2 : Synthèse selon l'exemple 2 du brevet WO 0071603

Le mode opératoire correspond à celui de l'exemple B1, sauf qu'au lieu de l'acide cinnamique on charge 13.07 g d'acide crotonique.
Le produit obtenu est légèrement jaune, friable, inodore. La Tg est de 83°C (mesuré par DSC : 10°K/min).

Exemple B3 :

Le mode opératoire correspond à celui de l'exemple B1, sauf qu'au lieu de l'acide cinnamique on charge 13.07 g d'acide undécénelique .
Le produit obtenu est incolore, friable, inodore. La Tg est de 90°C (mesuré par DSC : 10°K/min).

Exemple B4 : copolymère à blocs polyamides et blocs polyéthers.

On opère dans un réacteur de 4 litres de capacité, à trois tubulures : entrée de gaz, communication avec un système de distillation comprenant un condenseur relié à un récepteur de distillat ainsi qu'un agitateur à ancre.
Dans ce réacteur, on introduit : 42.6 parties de lactame 6, 22.3 parties de sel d'acide adipique et d'hexaméthylènediamine, 12.7 parties d'hexaméthylènediamine, 17.1 parties d'acide isophthalique, 5.05 parties de mono sel de l'acide 5-sulfo isophthalique, et 4 parties d'eau deminéralisée.
Le réacteur est purgé à l'azote puis chauffé toutes vannes fermées jusqu'à 260°C matière en 100 minutes. Pendant 2 heures le réacteur est en palier à la pression de 18 bar. On commence à la fin de ce palier la détente (pendant 90 minutes), la température matière à la fin de la détente est de 250°C. On fait passer un courant d'azote pendant 45 minutes. Dans cette première étape on vise une masse Mn de 7000g/mol de 94 parties d'un oligomère limité diacide.

Ensuite on ajoute dans le même autoclave à 250°C 9.53 parties de polyoxyéthylène glycol ayant un poids moléculaire en nombre de 600 g/mol. Le réacteur reste sous balayage d'azote pendant 80 minutes à 260 °C. Ensuite on met le réacteur sous vide jusqu'à 10 mbar en 70 minutes. On introduit 0.5 parties de tetrabutylate de zirconium. Après 40 min le réacteur est mis sous pression et le polymère est sorti du réacteur, recueilli sur une bande refroidie pour assurer une solidification rapide.

Le produit obtenu est légèrement jaune, inodore. La Tg est de 52°C (mesuré par DSC : 10°K/min).

Exemple B5 : PA 6 avec limiteur de chaîne SIPNa.

Un mélange de 993 parties de lactame 6, 225 parties de mono sel de l'acide 5- sulfo isophthalique, et 96 parties d'eau a été placé dans un autoclave en acier inoxydable de 4 litres, qui a ensuite été rempli de l'azote remplaçant l'air suivi par un chauffage à 270 °C sous pression pendant 4 heures tout en agitant pour obtenir 1118 parties d'oligomère de polyamide avec des extrémités de chaîne carboxyliques ayant un poids moléculaire moyen en nombre de 1450 g/mol. Ensuite on passe à la pression atmospérique pour dépoter un produit incolore, friable.

Exemple B6 : Polyester avec groupement SIPNa vendu par Eastman sous la référence AQ 55S.

**Mélange C=A+B :**

Le copolymère A peut donc être mélangé avec le produit B, A+B=C, selon un des quelconques exemples de l'invention pour être utilisé dans une matrice thermoplastique afin de rendre la résine antistatique.

| | Unité | témoin | Ex. C1 | Ex. C2 |
|---|---|---|---|---|
| A4 | % massique | 100 | 80 | 80 |
| B4 | % massique | | 20 | |
| B2 | % massique | | | 20 |
| Résistivité superficielle | Ohms / | 3.2E+11 | 8.70E+09 | 3.10E+09 |
| Résistivité volumique | Ohms . cm | 8.8E+09 | 3.5E+08 | 1.30E+08 |

Le tableau ci-dessus montre clairement que l'addition des composés B2 ou B4 permet une amélioration de l'antistatisme du composé A4.

Dans l'exemple qui suit, la résine thermoplastique (D) est un PS dont les caractéristiques sont les suivantes:

**PS** : il s'agit d'un copolymère styrène - butadiène. Ce copolymère est caractérisé par un indice de fluidité à 200°C sous 5 kg compris entre 3 et 5 g/10 min (norme ISO 1133:91) Il est également caractérisé par une température Vicat de 97°C (norme ISO 306A50) et une résistance au choc Izod (norme ISO 180/1A) de 10 kJ/m2. Il est vendu par ATOFINA sous la référence LACQRENE®4241.

Les compositions de l'invention se préparent par les techniques habituelles de mélange des thermoplastiques telles que par exemple l'extrusion monovis ou bivis ou encore à l'aide d'un appareil du type Ko-malaxeur BUSS®. Le tableau suivant, dans lequel les proportions sont en poids, montre clairement l'effet de l'addition des produits A et B sur les performances antistatiques du produit final.

| | Ex 1 | Ex 2 | Ex 3 | Ex 4 | Ex 5 | Ex 6 | Ex 7 |
|---|---|---|---|---|---|---|---|
| PS | | | 100 | 90 | 90 | 90 | 90 |
| A1 | 100 | 90 | | 10 | | | |
| A4 | | | | | 10 | | 8 |
| B5 | | 10 | | | | | |
| B6 | | | | | | | 2 |
| C1=90A1+10B5 | | | | | | 10 | |
| Résistivité volumique Ohm.cm | 8.8 E+09 | 2.5 E+09 | 1.4 E+17 | 4 E+14 | 2.7 E+13 | 1.4 E+13 | 7.9 E+11 |
| Résistivité superficielle Ohm/□ | 3.2 E+11 | 1.6 E+10 | 2.9 E+14 | 2 E+12 | 1.4 E+12 | 1.2 E+11 | 8.5 E+9 |

## Revendications

1. Composition comprenant pour 100 parties en poids :

   - 99 à 60 parties d'un polymère thermoplastique (D),
   - 1 à 40 parties de (A) + (B)
   - (A) étant un copolymère à blocs polyamides et blocs polyéther,
   - (B) étant un polymère ou un oligomère comprenant dans sa chaîne au moins une fonction ionique et choisi parmi :

     les polyamides,
     les copolymères à blocs polyamides et blocs polyéther,
     les polyesters ou polyétheramides thermoplastiques,
     les copolymères à blocs polyesters et blocs polyéther,
     les polyéthers,
     les polyuréthanes.

2. Composition selon la revendication 1 dans laquelle les blocs polyéthers de (A) sont des blocs PEG ou des blocs obtenus par oxyethylation de bisphenols.

3. Composition selon la revendication 1 dans laquelle les blocs polyéthers de (A) sont constitués d'amines primaires ethoxylées.

4. Composition selon l'une quelconque des revendications précédentes dans laquelle la fonction ionique est choisie parmi les sulfonates d'acides dicarboxyliques aromatiques.

5. Composition selon la revendication 4 dans laquelle la fonction ionique est choisie parmi les sels de métaux alcalins ou d'ammonium.

6. Composition selon l'une quelconque des revendications précédentes dans laquelle la masse molaire $\overline{Mn}$ du polyamide (B) est supérieure à 500 g/mol.

7. Composition selon l'une quelconque des revendications 1 à 5 dans laquelle les blocs polyamides du copolymère (B) à blocs polyamides et blocs polyéthers proviennent de la condensation d'un acide alpha-oméga aminocarboxylique ou du lactame éventuel correspondant en présence d'un diacide carboxylique sulfoné comme limiteur de chaîne.

8. Composition selon l'une quelconque des revendications 1 à 5 dans laquelle les blocs polyamides du copolymère (B) à blocs polyamides et blocs polyéthers proviennent de la condensation d'au moins un diacide carboxylique sulfoné et d'au moins une diamine.

9. Composition selon l'une quelconque des revendications 1 à 5 dans laquelle les blocs polyamides du copolymère (B) à blocs polyamides et blocs polyéthers proviennent de la condensation d'un ou plusieurs acides alpha oméga aminocarboxyliques et/ou d'un ou plusieurs lactames ayant de 6 à 12 atomes de carbone en présence d'un diacide carboxylique sulfoné comme limiteur de chaîne et sont de masse $\overline{Mn}$ entre 400 et 800 g/mol.

10. Composition selon l'une quelconque des revendications 1 à 5 dans laquelle les blocs polyamides du copolymère (B) à blocs polyamides et blocs polyéthers proviennent de la condensation d'au moins un acide alpha oméga aminocarboxylique (ou un lactame), au moins une diamine et au moins un diacide carboxylique sulfoné.

11. Composition selon l'une quelconque des revendications 1 à 5 dans laquelle les blocs polyamides du copolymère (B) à blocs polyamides et blocs polyéthers proviennent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence d'un diacide carboxylique sulfoné limiteur de chaîne.

12. Composition selon l'une quelconque des revendications 1 à 5 dans laquelle les blocs polyéthers du copolymère (B) à blocs polyamides et blocs polyéthers sont des polyétherdiols et résultent de l'enchainement de blocs polyéthers et d'un diacide carboxylique sulfoné.

13. Composition selon l'une quelconque des revendications 1 à 5 dans laquelle les polyesters thermoplastiques (B) sont des produits saturés de condensation de glycols, d'au moins un diacide carboxylique sulfoné et éventuellement d'autres acides dicarboxyliques (différents du diacide carboxylique sulfoné) ou de leurs dérivés.

14. Composition selon l'une quelconque des revendications 1 à 5 dans laquelle les polyesteramides thermoplastiques (B) sont des produits saturés de condensation de glycols, d'au moins un diacide carboxylique sulfoné, d'au moins une diamine et éventuellement d'autres acides dicarboxyliques (différents du diacide carboxylique sulfoné) ou de leurs dérivés.

15. Composition selon l'une quelconque des revendications 1 à 5 dans laquelle les blocs polyesters des copolymères (B) à blocs polyesters et blocs polyéthers résultent de la réaction d'un diol court allongeur de chaîne avec au moins un diacide carboxylique sulfoné et éventuellement d'autres acides dicarboxyliques (différents du diacide carboxylique sulfoné) ou de leurs dérivés.

16. Composition selon l'une quelconque des revendications 1 à 5 dans laquelle les blocs polyéthers des copolymères (B) à blocs polyesters et blocs polyéthers sont des polyétherdiols et résultent de l'enchainement de blocs polyéthers et d'un diacide carboxylique sulfoné.

17. Composition selon l'une quelconque des revendications 1 à 5 dans laquelle les polyéthers (B) sont des polyétherdiols et résultent de l'enchainement de blocs polyéthers et d'un diacide carboxylique sulfoné.

18. Composition selon l'une quelconque des revendications 1 à 5 dans laquelle les polyéthers des polyuréthanes (B) sont des polyétherdiols et résultent de l'enchaînement de blocs polyéthers et d'un diacide carboxylique contenant une fonction ionique.

19. Composition selon l'une quelconque des revendications 1 à 5 dans laquelle les polyurethanes (B) résultent de la réaction d'au moins un diisocyanate avec un diol court ledit diol court résultant de l'enchainement (i) d'au moins

un diol choisi dans le groupe constitué du neopentylglycol, du cyclohexanediméthanol et des glycols aliphatiques de formule $HO(CH_2)_nOH$ dans laquelle n est un entier valant de 2 à 10 et (ii) d'au moins un diacide carboxylique contenant une fonction ionique.

**20.** Composition selon l'une quelconque des revendications précédentes dans laquelle les proportions de (D) sont de 95 à 85 parties pour respectivement 5 à 15 parties de (A)+(B).

**21.** Composition selon l'une quelconque des revendications précédentes dans laquelle la proportion de (B) est de 1 à 99 % en poids de (A)+(B).

**22.** Composition selon l'une quelconque des revendications précédentes dans laquelle la proportion de (B) est de 5 à 20% en poids de (A)+(B).

**23.** Composition selon l'une quelconque des revendications précédentes dans laquelle (D) est choisi parmi les polyoléfines, les polyamides, les polymères fluorés, les polyesters saturés, le polycarbonate, les résines styréniques, le PMMA, les polyuréthanes thermoplastiques (TPU), les copolymères à blocs polyamides, les copolymères à blocs polyester et blocs polyéther, le PVC, les copolymères de l'éthylène et de l'alcool vinylique (EVOH) et les polycétones.

**Patentansprüche**

**1.** Zusammensetzung, enthaltend pro 100 Gewichtsteile:

- 99 bis 60 Teile eines thermoplastischen Polymers (D),
- 1 bis 40 Teile (A) + (B),
- wobei es sich bei (A) um ein Copolymer mit Polyamidblöcken und Polyetherblöcken
- und bei (B) um ein Polymer oder Oligomer, das in seiner Kette mindestens eine ionische Funktion enthält und unter:

  Polyamiden,
  Copolymeren mit Polyamidblöcken und Polyetherblöcken,
  thermoplastischen Polyestern oder Polyetheramiden,
  Copolymeren mit Polyesterblöcken und Polyetherblöcken
  Polyethern und
  Polyurethanen

  ausgewählt ist, handelt.

**2.** Zusammensetzung nach Anspruch 1, in der es sich bei den Polyetherblöcken von (A) um PEG oder durch Oxethylierung von Bisphenolen erhaltene Blöcke handelt.

**3.** Zusammensetzung nach Anspruch 1, in der die Polyetherblöcke von (A) aus ethoxylierten primären Aminen bestehen.

**4.** Zusammensetzung nach einem der vorhergehenden Ansprüche, in der die ionische Funktion unter Sulfonaten aromatischer Dicarbonsäuren ausgewählt ist.

**5.** Zusammensetzung nach Anspruch 4, in der die ionische Funktion unter Alkalimetall- oder Ammoniumsalzen ausgewählt ist.

**6.** Zusammensetzung nach einem der vorhergehenden Ansprüche, in der die Molmasse $\overline{Mn}$ des Polyamids (B) mehr als 500 g/mol beträgt.

**7.** Zusammensetzung nach einem der Ansprüche 1 bis 5, in der die Polyamidblöcke des Copolymers (B) mit Polyamidblöcken und Polyetherblöcken aus der Kondensation einer alpha,omega-Aminocarbonsäure oder gegebenenfalls des entsprechenden Lactams in Gegenwart einer sulfonierten Dicarbonsäure als Kettenabbruchmittel stammen.

**8.** Zusammensetzung nach einem der Ansprüche 1 bis 5, in der die Polyamidblöcke des Copolymers (B) mit Polyamidblöcken und Polyetherblöcken aus der Kondensation mindestens einer sulfonierten Dicarbonsäure und mindestens eines Diamins stammen.

**9.** Zusammensetzung nach einem der Ansprüche 1 bis 5, in der die Polyamidblöcke des Copolymers (B) mit Polyamidblöcken und Polyetherblöcken aus der Kondensation einer oder mehrerer alpha,omega-Aminocarbonsäuren und/oder eines oder mehrerer Lactame mit 6 bis 12 Kohlenstoffatomen in Gegenwart einer sulfonierten Dicarbonsäure als Kettenabbruchmittel stammen und eine Masse $\overline{Mn}$ zwischen 400 und 800 g/mol aufweisen.

**10.** Zusammensetzung nach einem der Ansprüche 1 bis 5, in der die Polyamidblöcke des Copolymers (B) mit Polyamidblöcken und Polyetherblöcken aus der Kondensation mindestens einer alpha,omega-Aminocarbonsäure (oder eines Lactams), mindestens eines Diamins und mindestens einer sulfonierten Dicarbonsäure stammen.

**11.** Zusammensetzung nach einem der Ansprüche 1 bis 5, in der die Polyamidblöcke des Copolymers (B) mit Polyamidblöcken und Polyetherblöcken aus der Kondensation von mindestens zwei alpha,omega-Aminocarbonsäuren oder mindestens zwei Lactamen mit 6 bis 12 Kohlenstoffatomen und einer Aminocarbonsäure, die nicht die gleiche Zahl von Kohlenstoffatomen aufweist, in Gegenwart einer sulfonierten Dicarbonsäure als Kettenabbruchmittel stammen.

**12.** Zusammensetzung nach einem der Ansprüche 1 bis 5, in der die Polyetherblöcke des Copolymers (B) mit Polyamidblöcken und Polyetherblöcken Polyetherdiole sind und sich aus der Verknüpfung von Polyetherblöcken und einer sulfonierten Dicarbonsäure ergeben.

**13.** Zusammensetzung nach einem der Ansprüche 1 bis 5, in der es sich bei den thermoplastischen Polyestern (B) um gesättigte Produkte der Kondensation von Glykolen, mindestens einer sulfonierten Dicarbonsäure und gegebenenfalls anderer Dicarbonsäuren (die sich von der sulfonierten Dicarbonsäure unterscheiden) oder Derivaten davon handelt.

**14.** Zusammensetzung nach einem der Ansprüche 1 bis 5, in der es sich bei den thermoplastischen Polyesteramiden (B) um gesättigte Produkte der Kondensation von Glykolen, mindestens einer sulfonierten Dicarbonsäure, mindestens eines Diamins und gegebenenfalls anderer Dicarbonsäuren (die sich von der sulfonierten Dicarbonsäure unterscheiden) oder Derivaten davon handelt.

**15.** Zusammensetzung nach einem der Ansprüche 1 bis 5, in der die Polyesterblöcke des Copolymers (B) mit Polyesterblöcken und Polyetherblöcken sich aus der Umsetzung eines kurzkettigen kettenverlängernden Diols mit mindestens einer sulfonierten Dicarbonsäure und gegebenenfalls anderen Dicarbonsäuren (die sich von der sulfonierten Dicarbonsäure unterscheiden) oder Derivaten davon ergeben.

**16.** Zusammensetzung nach einem der Ansprüche 1 bis 5, in der die Polyetherblöcke der Copolymere (B) mit Polyesterblöcken und Polyetherblöcken Polyetherdiole sind und sich aus der Verknüpfung von Polyetherblöcken und einer sulfonierten Dicarbonsäure ergeben.

**17.** Zusammensetzung nach einem der Ansprüche 1 bis 5, in der die Polyether (B) Polyetherdiole sind und sich aus der Verknüpfung von Polyetherblöcken und einer sulfonierten Dicarbonsäure ergeben.

**18.** Zusammensetzung nach einem der Ansprüche 1 bis 5, in der die Polyether der Polyurethane (B) Polyetherdiole sind und sich aus der Verknüpfung von Polyetherblöcken und einer sulfonierten Dicarbonsäure mit einer ionischen Funktion ergeben.

**19.** Zusammensetzung nach einem der Ansprüche 1 bis 5, in der sich die Polyurethane (B) aus der Umsetzung mindestens eines Diisocyanats mit einem kurzkettigen Diol ergeben, wobei sich das kurzkettige Diol aus der Verknüpfung (i) mindestens eines Diols aus der Gruppe bestehend aus Neopentylglykol, Cyclohexandimethanol und aliphatischen Glykolen der Formel $HO(CH_2)_nOH$, worin n für eine ganze Zahl von 2 bis 10 steht, und (ii) mindestens einer sulfonierten Dicarbonsäure mit einer ionischen Funktion ergibt.

**20.** Zusammensetzung nach einem der vorhergehenden Ansprüche, in der sich die Anteile an (D) auf 95 bis 85 Teile pro respektive 5 bis 15 Teile (A)+(B) belaufen.

**21.** Zusammensetzung nach einem der vorhergehenden Ansprüche, in der sich der Anteil an (B) auf 1 bis 99 Gew.-%, bezogen auf (A)+(B), beläuft.

**22.** Zusammensetzung nach einem der vorhergehenden Ansprüche, in der sich der Anteil an (B) auf 5 bis 20 Gew.-%, bezogen auf (A)+(B), beläuft.

**23.** Zusammensetzung nach einem der vorhergehenden Ansprüche, in der (D) unter Polyolefinen, Polyamiden, Fluorpolymeren, gesättigten Polyestern, Polycarbonat, Styrolharzen, PMMA, thermoplastischen Polyurethanen (TPU), Copolymeren mit Polyamidblöcken, Copolymeren mit Polyesterblöcken und Polyetherblöcken, PVC, Copolymeren von Ethylen und Vinylalkohol (EVOH) und Polyketonen ausgewählt ist.

## Claims

**1.** Composition comprising, per 100 parts by weight:

- 99 to 60 parts of a thermoplastic polymer (D),
- 1 to 40 parts of (A) + (B)
- (A) being a copolymer comprising polyamide blocks and polyether blocks,
- (B) being a polymer or an oligomer which comprises, in its chain, at least one ionic functional group and is chosen from:

  polyamides,
  copolymers comprising polyamide blocks and polyether blocks,
  thermoplastic polyesters or polyesteramides,
  copolymers comprising polyester blocks and polyether blocks,
  polyethers,
  polyurethanes.

**2.** Composition according to Claim 1, in which the polyether blocks of (A) are PEG blocks or blocks obtained by oxyethylation of bisphenols.

**3.** Composition according to Claim 1, in which the polyether blocks of (A) are composed of ethoxylated primary amines.

**4.** Composition according to any one of the preceding claims, in which the ionic functional group is chosen from the sulphonates of aromatic dicarboxylic acids.

**5.** Composition according to Claim 4, in which the ionic functional group is chosen from alkali metal or ammonium salts.

**6.** Composition according to any one of the preceding claims, in which the molar mass $\overline{Mn}$ of the polyamide (B) is greater than 500 g/mol.

**7.** Composition according to any one of Claims 1 to 5, in which the polyamide blocks of the copolymer (B) comprising polyamide blocks and polyether blocks originate from the condensation of an $\alpha,\omega$-aminocarboxylic acid or of the optional corresponding lactam in the presence of a sulphonated dicarboxylic acid as chain-limiting agent.

**8.** Composition according to any one of Claims 1 to 5, in which the polyamide blocks of the copolymer (B) comprising polyamide blocks and polyether blocks originate from the condensation of at least one sulphonated dicarboxylic acid and of at least one diamine.

**9.** Composition according to any one of Claims 1 to 5, in which the polyamide blocks of the copolymer (B) comprising polyamide blocks and polyether blocks originate from the condensation of one or more $\alpha,\omega$-aminocarboxylic acids and/or of one or more lactams having from 6 to 12 carbon atoms in the presence of a sulphonated dicarboxylic acid as chain-limiting agent and have a mass $\overline{Mn}$ of between 400 and 800 g/mol.

**10.** Composition according to any one of Claims 1 to 5, in which the polyamide blocks of the copolymer (B) comprising

polyamide blocks and polyether blocks originate from the condensation of at least one α,ω-aminocarboxylic acid (or one lactam), at least one diamine and at least one sulphonated dicarboxylic acid.

**11.** Composition according to any one of Claims 1 to 5, in which the polyamide blocks of the copolymer (B) comprising polyamide blocks and polyether blocks originate from the condensation of at least two α,ω-aminocarboxylic acids or of at least two lactams having from 6 to 12 carbon atoms or of a lactam and of an aminocarboxylic acid which does not have the same number of carbon atoms in the presence of a chain-limiting sulphonated dicarboxylic acid.

**12.** Composition according to any one of Claims 1 to 5, in which the polyether blocks of the copolymer (B) comprising polyamide blocks and polyether blocks are polyetherdiols and result from the linking of polyether blocks and of a sulphonated dicarboxylic acid.

**13.** Composition according to any one of Claims 1 to 5, in which the thermoplastic polyesters (B) are saturated condensation products of glycols, of at least one sulphonated dicarboxylic acid and optionally of other dicarboxylic acids (other than the sulphonated dicarboxylic acid) or of their derivatives.

**14.** Composition according to any one of Claims 1 to 5, in which the thermoplastic polyesteramides (B) are saturated condensation products of glycols, of at least one sulphonated dicarboxylic acid, of at least one diamine and optionally of other dicarboxylic acids (other than the sulphonated dicarboxylic acid) or of their derivatives.

**15.** Composition according to any one of Claims 1 to 5, in which the polyester blocks of the copolymers (B) comprising polyester blocks and polyether blocks result from the reaction of a chain-extending short diol with at least one sulphonated dicarboxylic acid and optionally other dicarboxylic acids (other than the sulphonated dicarboxylic acid) or their derivatives.

**16.** Composition according to any one of Claims 1 to 5, in which the polyether blocks of the copolymers (B) comprising polyester blocks and polyether blocks are polyetherdiols and result from the linking of polyether blocks and of a sulphonated dicarboxylic acid.

**17.** Composition according to any one of Claims 1 to 5, in which the polyethers (B) are polyetherdiols and result from the linking of polyether blocks and of a sulphonated dicarboxylic acid.

**18.** Composition according to any one of Claims 1 to 5, in which the polyethers of the polyurethanes (B) are polyetherdiols and result from the linking of polyether blocks and of a dicarboxylic acid comprising an ionic functional group.

**19.** Composition according to any one of Claims 1 to 5, in which the polyurethanes (B) result from the reaction of at least one diisocyanate with a short diol, the said short diol resulting from the linking (i) of at least one diol chosen from the group consisting of neopentyl glycol, of cyclohexanedimethanol and of aliphatic glycols of formula $HO(CH_2)_nOH$ in which n is an integer ranging from 2 to 10 and (ii) of at least one dicarboxylic acid comprising an ionic functional group.

**20.** Composition according to any one of the preceding claims, in which the proportions of (D) are from 95 to 85 parts for respectively 5 to 15 parts of (A)+(B).

**21.** Composition according to any one of the preceding claims, in which the proportion of (B) is from 1 to 99% by weight of (A)+(B).

**22.** Composition according to any one of the preceding claims, in which the proportion of (B) is from 5 to 20% by weight of (A)+(B).

**23.** Composition according to any one of the preceding claims, in which (D) is chosen from polyolefins, polyamides, fluoropolymers, saturated polyesters, polycarbonate, styrene resins, PMMA, thermoplastic polyurethanes (TPU), copolymers comprising polyamide blocks, copolymers comprising polyester blocks and polyether blocks, PVC, copolymers of ethylene and of vinyl alcohol (EVOH) and polyketones.